# EUROPÄISCHE PATENTSCHRIFT

(11) **EP 4 100 360 B1**
(45) Veröffentlichungstag und Bekanntmachung des Hinweises auf die Patenterteilung: **30.07.2025**
(21) Anmeldenummer: 21701682.3
(22) Anmeldetag: 13.01.2021
(51) Int. Cl.: C01B 21/26, C01B 21/44, B01D 53/86, B01D 53/04

(54) **ABSORPTIONSTURM FÜR EINE SALPETERSÄUREANLAGE UND VERFAHREN ZUR HERSTELLUNG VON SALPETERSÄURE**
ABSORPTION TOWER FOR A NITRIC ACID PLANT METHOD FOR PRODUCING NITRIC ACID
TOUR D'ABSORPTION POUR UNE MÉTHODE D'INSTALLATION D'ACIDE NITRIQUE POUR LA PRODUCTION D'ACIDE NITRIQUE

(30) Priorität: 03.02.2020 DE 102020201245
(43) Veröffentlichungstag der Anmeldung: 14.12.2022
(73) Patentinhaber: thyssenkrupp Uhde GmbH, 44141 Dortmund (DE); thyssenkrupp AG, 45143 Essen (DE)
(72) Erfinder: STEGT, Björn, 59348 Lüdinghausen (DE)
(74) Vertreter: thyssenkrupp Intellectual Property GmbH
(86) Internationale Anmeldenummer: PCT/EP2021/050595
(87) Internationale Veröffentlichungsnummer: WO 2021/156031

(56) Entgegenhaltungen:
- DE-A1- 102014 006 017
- DE-T2- 69 009 077
- US-A- 1 840 063

## Beschreibung

Die vorliegende Erfindung betrifft einen Absorptionsturm für eine Anlage zur Herstellung von Salpetersäure nach dem Ostwald-Verfahren, umfassend eine Mehrzahl übereinander angeordneter, zueinander jeweils beabstandeter Siebböden, einen Einlass für Wasser in einem oberen Bereich des Absorptionsturms, einen Einlass für gasförmige Stickstoffoxide in einem unteren Bereich des Absorptionsturms sowie einen im unteren Endbereich des Absorptionsturms unterhalb des untersten Siebbodens angeordneten Kolonnensumpf, welcher durch wenigstens eine Trennwand in wenigstens zwei voneinander getrennte Bereiche unterteilt ist.

### Stand der Technik

Die Herstellung von Salpetersäure ist einer der etablierten Prozesse der chemischen Technik, welcher nach Einführung des Haber-Bosch-Verfahrens zur NH₃-Synthese von W. Ostwald auf Basis von Platin-Katalysatoren zur industriellen Reife entwickelt wurde und dessen Konzeption auch heute noch die Basis der modernen HNO₃-Herstellung bildet.

Zur Herstellung von Salpetersäure wird zunächst Ammoniak NH₃ mit Luft reaktiv umgesetzt und Stickoxid NO erzeugt, welches dann zu Stickstoffdioxid NO₂ oxidiert wird.

Anschließend wird das so gewonnene Stickstoffdioxid NO₂ in Wasser absorbiert und es entsteht die Salpetersäure. Damit möglichst viel von dem gewonnenen Stickstoffdioxid NO₂ von Wasser absorbiert wird, geschieht die Absorption in der Regel bei erhöhtem Druck, vorzugsweise bei Drücken zwischen etwa 4 und etwa 14 bar.

Bei der Salpetersäureherstellung wird also Ammoniak mit Luft in Gegenwart von Platinnetzen verbrannt. Dabei werden die Netze von einem Gasgemisch aus typischerweise etwa 9 - 12 Vol.-% NH₃ und Luft durchströmt, wobei sich an den Netzen durch die Exothermie der Oxidationsreaktion eine Temperatur von etwa 800 - 950°C einstellt. Dabei wird NH₃ sehr selektiv zu Stickstoffmonoxid (NO) oxidiert (A, Reaktionsschema I), welches dann im Laufe des weiteren Prozesses zu Stickstoffdioxid (NO₂) oxidiert wird (B, Reaktionsschema II) und schließlich mit Wasser in einer Absorptionsvorrichtung zu HNO₃ umgesetzt wird (C, Reaktionsschema III).
A) Verbrennung von Ammoniak in einem Oxidationsreaktor unter Umsetzung von Ammoniak mit Sauerstoff zu Stickoxid

   4 NH₃ + 5 O₂ → 4 NO + 6 H₂O (I)
B) Oxidation von Stickstoffmonoxid zu Stickstoffdioxid

   2 NO + O₂ → 2 NO₂ (II)

   Die Reaktion läuft im Salpetersäureprozess nach dem Ostwaldverfahren als nicht-katalysierte Gasphasenreaktion ab.
C) Bildung von HNO₃ (Salpetersäure) durch Absorption von NO₂ in Wasser in den Kondensatoren und dem Absorptionsturm unter Rückbildung von NO

   3 NO₂ + H₂O → 2 HNO₃ + NO (III)

Ein typisches Verfahren sowie eine Anlage zur Herstellung von Salpetersäure werden beispielsweise in der WO 2018/137996 A1 beschrieben.

Beispielsweise ist aus DE 10 2014 006017 A1 eine herkömmliche Salpetersäureanlage bekannt, in welcher die gasförmigen Reaktionsprodukte einer Ammoniak-Verbrennungsanlage einem Kondensator zugeführt werden, in dem Wasserdampf aus den gasförmigen Reaktionsprodukten auskondensiert. Ein Teil der Stickstoffoxide aus der Gasphase reagiert dabei mit dem Wasser unter Bildung von Salpetersäure, die sich als wässrige Lösung abscheidet. Die wässrige Salpetersäure aus dem Kondensator wird über eine Steigleitung in den Kopfraum eines Absorptionsturms eingeleitet, welcher als Mitteldruck-Kolonne ausgebildet ist, während das restliche Gasgemisch aus dem Kondensator über eine Gaszuleitung in den unteren Teil des Absorptionsturms eingeleitet wird. Das Gasgemisch strömt aus dem unteren Teil des Absorptionsturms über Sieb- oder Glockenböden nach oben und tritt dabei mit der wässrigen Salpetersäure in Kontakt, die aus dem Kopfraum über die Sieb- oder Glockenböden nach unten fließt. Deren Konzentration nimmt durch Aufnahme von Stickstoffdioxid aus dem Gasgemisch zu, so dass im Sumpf des Absorptionsturms konzentriertere Salpetersäure als Rohsäure anfällt und über eine Ableitung abgezogen werden kann. Eine Salpetersäureanlage mit einem ähnlichen Absorptionsturm ist aus DE 690 09 077 T2 bekannt, in welchem das gasförmige Reaktionsprodukt aus einem Oxygenierapparat unten in einen Absorberturm eingeleitet wird und in diesem über Gas-Flüssigkeits-Extraktionsböden nach oben strömt, wobei es in Kontakt tritt mit Wasser oder einer wässrigen Lösung von Salpetersäure und salpetriger Säure tritt, welche im Absorberturm über die Gas-Flüssigkeits-Extraktionsböden von oben nach unten fließt, sodass aus dem Reservoir am Boden des Absorberturms Salpetersäure abgezogen werden kann.

Ein weiterer Absorptionsturm einer Salpetersäureanlage in herkömmlicher Bauweise mit einer Anzahl übereinander beabstandet angeordneter Böden ist beispielsweise in der US 1,840,063 A offenbart. Das Wasser wird im oberen Bereich in den Absorptionsturm eingeleitet, während das zu absorbierende Stickstoffdioxid im unteren Bereich des Absorptionsturms zugeführt wird und durch jeweils Öffnungen in den Böden nach oben strömen kann. Bei den Böden des Absorptionsturms handelt es sich um Siebböden, die zumeist weitgehend vollständig gelocht sind. Das Wasser strömt auf den obersten Boden, überströmt eine aufwärts gerichtete Wand und gelangt dann in ein vertikal ausgerichtetes Rohr, durch das die Flüssigkeit nach unten auf den nächsten tiefer liegenden Boden fließt. Jeder der horizontalen Böden ist mit einer ähnlichen Überströmvorrichtung ausgestattet und je weiter die Flüssigkeit nach unten gelangt, desto konzentrierter wird die Salpetersäure, bis schließlich im Sumpf des Absorptionsturms die höchste Säurekonzentration vorliegt. Bei Verwendung von in der Regel wenigstens fünfzehn übereinander liegenden Böden kann konzentrierte Salpetersäure mit Konzentrationen von mehr als 55 % hergestellt werden.

Aus der DE 23 20 520 A ist eine Bodenkolonne zur Herstellung von Salpetersäure durch Oxidation und Absorption von nitrosen Gasen in Wasser bekannt, bei der abwechselnd kleinere zentrale perforierte Waschböden und jeweils zu diesen beabstandet größere radial äußere ringförmige Waschböden vorgesehen sind, so dass die aufsteigenden nitrosen Gase ohne weitere Leitmittel abwechselnd spiralig von der Kolonnenmitte zur Kolonnenwand und umgekehrt strömen. Außerdem sind entgegengesetzt konisch geneigte Abdeckböden vorhanden. Die Säure fließt über die geneigten Abdeckböden von außen zur Mitte zu den zentralen Waschböden bzw. von der Mitte nach außen zu den äußeren ringförmigen Waschböden. Weiterhin sind Verteilerrinnen vorgesehen, deren Überlaufhöhen so bemessen sind, dass sich auf den zugehörigen Waschböden ein zur Verhinderung ihres Leerblasens ausreichender Säurestau bildet.

In der US-Patentschrift US 3,338,567 A wird ein Absorptionsturm für die Herstellung von Salpetersäure beschrieben, welcher übereinanderliegende horizontale Siebböden aufweist, wobei gasförmiges Stickstoffdioxid von unten nach oben durch die perforierten Siebböden strömt und dabei in Kontakt kommt mit der auf den Siebböden jeweils stehenden Flüssigkeit (d.h. verdünnte bzw. mehr oder weniger konzentrierte Salpetersäure, je nach Höhe des jeweiligen Siebbodens im Absorptionsturm). Um zu verhindern, dass bei nachlassendem Gasdruck des aufsteigenden Gases die auf dem Siebboden stehende Flüssigkeit durch die Perforationen nach unten läuft und sich dadurch mit den stärker konzentrierten Säuren der darunterliegenden Siebböden mischt, ist für jeden Siebboden ein Flüssigkeitsvorratsbehälter vorgesehen, der so ausgebildet ist, dass Flüssigkeit auf dem Siebboden stehenbleibt, auch dann, wenn nach dem herunterfahren die Anlage wieder hochgefahren wird. Der Flüssigkeitsvorratsbehälter ist so konstruiert, dass man bei Abschalten der Anlage in vergleichsweise kurzer Zeit den Flüssigkeitspegel oberhalb des Siebbodens absenken kann. Der perforierte Bereich des Bodens wird zu beiden Seiten hin jeweils begrenzt von einer vertikalen Trennwand, die jeweils mit etwas Abstand oberhalb des Siebbodens endet, so dass Flüssigkeit unter der Trennwand hindurch in den Flüssigkeitsvorratsbehälter strömen kann. Durch Öffnen einer über ein Ventil absperrbaren Passage zur Atmosphäre hin kann Flüssigkeit von dem Siebboden in den Flüssigkeitsvorratsbehälter abgelassen werden und so die Höhe des Flüssigkeitspegels über dem Siebboden verringert werden. Umgekehrt kann bei Öffnen des Ventils einer Hochdruckleitung der Flüssigkeitsvorratsbehälter mit Druck beaufschlagt werden und die Flüssigkeit aus dem Flüssigkeitsvorratsbehälter wird dann wieder auf den Siebboden gedrückt, so dass dort der Flüssigkeitspegel wieder ansteigt. Die bei diesem bekannten Absorptionsturm verwendeten vertikalen Trennwände befinden sich jeweils über den Siebböden des Absorptionsturms und verlaufen außerdem in der Draufsicht gesehen segmentförmig zur zylindrischen äußeren Wandung des Absorptionsturms.

Die US 9,849,419 B2 beschreibt ein Verfahren zur Herstellung von Schwefelsäure, bei dem flüssige Säure einer ersten Konzentration in ein Gasreinigungssystem in Form eines gepackten Absorptionsbetts eingespeist wird und Gas durch das Gasreinigungssystem gefördert wird, so dass eine zweite Konzentration der flüssigen Säure erreicht wird, wobei die flüssige Säure aus dem Sumpf abgezogen wird. Der Sumpf der Absorptionsvorrichtung ist hier durch eine Trennwand in einen ersten und einen zweiten Bereich unterteilt, wobei in den beiden Bereichen Säuren mit unterschiedlichen Konzentrationen erzeugt werden. Diese Schrift bezieht sich auf die Schwefelsäureproduktion, die sich in mehreren Aspekten von der Herstellung konzentrierter Salpetersäure unterscheidet. Bei der Schwefelsäureproduktion wird oben Säure auf den Absorptionsturm aufgegeben anstelle von Wasser und der Absorptionsturm ist mit einem gepackten Bett gefüllt, durch das die oben aufgegebene Säure nach unten rieselt. In dem im Sumpf durch die Trennwand abgetrennten ersten Bereich wird Wasser oder verdünnte Säure zugegeben, um die Säurekonzentration in diesem Bereich des Sumpfs zu verdünnen. Bei diesem Verfahren wird die gleichzeitige Herstellung von Schwefelsäure mit zwei unterschiedlichen Säurekonzentration ermöglicht, wobei am Kopf des Absorptionsturms bereits eine konzentrierte Säure eingespeist wird und im Sumpf des Absorptionsturms zur Einstellung der Säurekonzentration die Säure teilweise wieder rückverdünnt wird. Die Technologie der Schwefelsäureherstellung ist auf die Produktion von Salpetersäure nicht übertragbar.

Für die Herstellung von Salpetersäure mit erhöhter Konzentration (typischer Weise im Bereich von 60 bis 65 Gew.-%) wird das Prozessgas in einen Absorptionsturm eingeleitet. Der Absorptionsturm ist eine Bodenkolonne mit beispielsweise etwa 25 bis etwa 35 Siebböden. Das Gas tritt am Fuß der Kolonne ein, während am Kopf der Kolonne Wasser aufgegeben wird. Das Prozessgas steigt durch die Löcher der Siebböden nach oben und wird dabei im Gegenstrom von der Flüssigkeit auf den Siebböden absorbiert. Durch den Druck des aufsteigenden Prozessgases wird vermieden, dass die Flüssigkeit durch die Löcher "abregnet", also ein Entleeren der Absorberböden wird so unterbunden.

Auf jedem Boden ergibt sich ein Konzentrationsgleichgewicht zwischen der Säurekonzentration der Flüssigkeit und dem Stickoxidgehalt in der Gasphase. Über alle Böden betrachtet ergibt sich so ein Konzentrationsprofil, bei dem am Fuß der Absorptionskolonne die Säurekonzentration am höchsten ist, während am Kopf der Kolonne nur eine sehr geringe Konzentration vorliegt.

Im Falle eines Druckabfalls von Seiten des zugeführten Gases (beispielsweise bei einer Abschaltung der Anlage oder einer Störung) ist der Gegendruck des Gases nicht mehr ausreichend, um die Flüssigkeit auf dem Boden zu halten, weshalb diese "abregnet" und im Sumpf der Kolonne gesammelt wird. Zunächst regnen die unteren Böden mit der höheren Säurekonzentration ab, gefolgt von immer weiter verdünnter Säure aus dem oberen Teil des Absorptionsturms. Die abgeregnete Salpetersäure im Sumpf der Kolonne stellt also ein Gemisch von allen Böden (unten befindet sich eine vergleichsweise starke Säure, oben wird eine vergleichsweise schwache Säure gebildet), dar. Die Gesamtkonzentration des Gemisches ist somit geringer.

Für das Starten der Anlage wird normalerweise eine gewisse Menge an Salpetersäure in den Absorptionsturm auf die unteren Böden aufgegeben. Dadurch stellt sich das Konzentrationsprofil viel schneller ein, als wenn man mit Wasser starten würde. Dies geschieht desto besser, je höher die Säurekonzentration auf dem untersten Boden ist. Würde man also das oben beschriebene Gesamtgemisch vorlegen, hätte man eine geringere Konzentration als zuvor vom untersten Boden abgeregnet ist.

Weiterhin ist es aus dem Stand der Technik bekannt, einen externen Puffertank zu verwenden. In diesen wird die abgeregnete Säure gefördert und es stellt sich ein dünneres Säuregemisch mit nur einer Konzentration ein. Neben diesem Nachteil gilt es zu bemerken, dass für diese Herangehensweise ein weiterer Tank, der Bauplatz, zusätzliche Verrohrung, etc. notwendig sind, welches sich in den Kosten der Anlage widerspiegelt.

Die Einstellung eines Konzentrationsprofils im Absorptionsturm mit nur einem Sumpf dauerte bei herkömmlichen Absorptionstürmen zu lange. Darüber hinaus wurde bei herkömmlichen Absorptionstürmen in der Anfahrphase zunächst nur Säure mit geringerer Konzentration produziert.

Die Aufgabe der vorliegenden Erfindung besteht darin, einen Absorptionsturm für eine Anlage zur Herstellung von Salpetersäure mit den eingangs genannten Merkmalen zur Verfügung zu stellen, welcher die Bereitstellung einer Säuremenge mit bestimmter mittlerer Konzentration insbesondere für die Befüllung der Kolonnenböden vor dem Anlagenstart ermöglicht, um eine verbesserte Absorption - verglichen mit Wasser oder einer gegenüber der besagten Säurekonzentration verminderten Säurekonzentration - zu ermöglichen.

Die Lösung der vorgenannten Aufgabe liefert ein Absorptionsturm für eine Anlage zur Herstellung von Salpetersäure der eingangs genannten Art mit den Merkmalen des Anspruchs 1.

Erfindungsgemäß ist im Kolonnensumpf des Absorptionsturms wenigstens eine Trennwand mit einem derartigen Verlauf angeordnet, dass sie den Kolonnensumpf in einen ersten, radial inneren und wenigstens einen zweiten, radial äußeren Bereich unterteilt. Durch diese Unterteilung wird es möglich, in dem ersten, radial inneren Bereich eine Salpetersäure mit einer höheren Konzentration aufzufangen. Wenn dieser Bereich beim Abregnen der Salpetersäure von den unteren Trennböden mit einer vergleichsweise konzentrierten Salpetersäure gefüllt ist, kann weitere nachfließende Salpetersäure, die von den höher gelegenen Siebböden abregnet und folglich weniger konzentriert ist, überströmen in den weiteren, radial äußeren Bereich, so dass dort eine weniger konzentrierte Säure aufgefangen wird und dabei verhindert wird, dass die nachfließende weniger konzentrierte Salpetersäure die Salpetersäure im radial inneren Bereich des Kolonnensumpfs verdünnt.

Nachfolgend sollen einige hierin verwendete Begriffe zum besseren Verständnis der vorliegenden Beschreibung der Erfindung noch einmal erläutert werden.

Der Ausdruck "Stickstoffoxide" wird in der Technik zusammenfassend für die bei der Oxidationsreaktion von Ammoniak entstehenden Oxide der verschiedenen Oxidationsstufen verwendet, nämlich Stickstoffmonoxid (NO), Stickstoffdioxid (NO₂), Distickstofftetroxid (N₂O₄) und Distickstoffmonoxid (N₂O), wobei bei der Reaktion hauptsächlich NO und NO₂ entstehen. Diese verschiedenen Stickstoffoxide werden in ihrer Gesamtheit auch mit NOx bezeichnet. Bei dem Schritt der Absorption der Stickstoffoxide in Wasser, welcher in dem erfindungsgemäßen Absorptionsturm abläuft, wird gemäß der obigen Gleichung C) Stickstoffdioxid (NO₂), in dem der Stickstoff die Oxidationsstufe 4 aufweist, weiter zu Salpetersäure (HNO₃) oxidiert, in der Stickstoff in der Oxidationsstufe 5 vorliegt.

Diese Reaktion der Absorption von Stickstoffdioxid in Wasser erfolgt in einem Absorptionsturm, wobei es sich hier um eine Absorptionskolonne handelt, die mehrere Siebböden aufweist und einen Kolonnensumpf in ihrem unteren Bereich hat. Die Begriffe "Absorptionsturm" und "Absorptionskolonne" können im Rahmen der vorliegenden Erfindung als synonym angesehen werden.

Bei einem "Siebboden" in einem Absorptionsturm handelt es sich um eine im Wesentlichen plattenförmige Struktur, die in dem Absorptionsturm zumeist horizontal oder gegebenenfalls zur Horizontalen geneigt angeordnet ist und die zahlreiche Löcher oder Perforationen aufweist, so dass einerseits die Flüssigkeit der sich ausbildenden Salpetersäure durch die Löcher eines Siebbodens hindurch auf das Niveau eines darunterliegenden Siebbodens ablaufen kann, wenn der Gasdruck von unterhalb des Siebbodens nachlässt (man spricht auch von "abregnen") und andererseits das gasförmige Stickstoffdioxid von unten nach oben aufsteigen und durch die Löcher des Siebbodens strömen kann, so dass die gasförmige Phase mit der flüssigen Phase in Kontakt kommt und sich durch den Absorptionsprozess Salpetersäure ausbildet.

Unter dem hierin verwendeten Begriff "Trennwand" wird eine im Wesentlichen vertikale Struktur aus einem ausreichend säurefesten Material verstanden, die im Sumpf des Absorptionsturms angeordnet ist und einen ersten Bereich des Kolonnensumpfs von wenigstens einem zweiten Bereich des Kolonnensumpfs so abtrennt, dass Flüssigkeit nicht direkt horizontal von dem einen Bereich in den anderen Bereich strömen kann. Das heißt, die Trennwand erstreckt sich nach unten hin bis zum Boden des Sumpfs, so dass anders als beispielsweise bei den Wänden oberhalb der Siebböden gemäß der US 3,338,567 A auch keine Flüssigkeit unter der Trennwand hindurchströmen kann. Weiterhin hat die Trennwand auch bis zu ihrer oberen Begrenzung hin keine Öffnungen, so dass Flüssigkeit nur durch Überströmen der Trennwand von dem ersten Bereich in den zweiten Bereich gelangen kann.

Gemäß einer bevorzugten Weiterentwicklung der erfindungsgemäßen Anlage ist die wenigstens eine Trennwand wenigstens abschnittsweise zylindrisch ausgebildet. Dies bedeutet, es ergibt sich ein erster vorzugsweise zylindrischer oder wenigstens teilweise oder abschnittsweise zylindrischer Bereich innerhalb der Trennwand, der von mindestens einem innenseitig durch die zylindrische Trennwand begrenzten radial weiter außen liegenden zweiten Bereich, der den ersten inneren Bereich umgibt, abgetrennt ist.

Gemäß einer bevorzugten Weiterbildung der erfindungsgemäßen Anlage ist die wenigstens eine Trennwand konzentrisch mit radialem Abstand zur äußeren Wandung im Kolonnensumpf angeordnet und unterteilt den Kolonnensumpf in einen ersten zylindrischen zentrischen Bereich innerhalb der Trennwand und einen zweiten, ringförmigen radial äußeren Bereich außerhalb der Trennwand. Dieser zweite ringförmige radial äußere Bereich umgibt somit bei dieser bevorzugten Variante konzentrisch den zylindrischen inneren Bereich, so dass vom unteren Siebboden oder von den unteren Siebböden beispielsweise beim Herunterfahren der Anlage abregnende konzentrierte Säure zunächst in den ersten inneren zylindrischen Bereich gelangt und aus diesem gewonnen (abgezogen) werden kann, um beispielsweise diese konzentrierte Säure beim wieder Anfahren der Anlage zu verwenden. Die dann später nachfließende Säure von den weiter oben liegenden Siebböden ist weniger konzentriert und strömt, nachdem der innere Bereich gefüllt ist, über die Trennwand über und gelangt dadurch zumindest weitestgehend in den radial äußeren Bereich jenseits der Trennwand. Eine geringfügige Vermischung von weniger konzentrierter Salpetersäure findet allenfalls im obersten Abschnitt des inneren Bereichs statt und dieser Effekt ist für die Gesamtkonzentration der Säure im ersten inneren Bereich vernachlässigbar. Ganz überwiegend gelangt die weniger konzentrierte Salpetersäure somit in den zweiten ringförmigen äußeren Bereich und kann getrennt von der Salpetersäure im ersten inneren Bereich gewonnen werden.

Gemäß einer bevorzugten Weiterbildung der erfindungsgemäßen Anlage ist eine erste, radial innere Trennwand konzentrisch mit radialem Abstand zur äußeren Wandung im Kolonnensumpf angeordnet und eine zweite, radial äußere Trennwand ist konzentrisch und mit radialem Abstand zu der ersten Trennwand und zwischen der radial inneren Trennwand und der äußeren Wandung des Kolonnensumpfs angeordnet. Bei dieser möglichen Variante der Erfindung sind somit zwei voneinander beabstandete Trennwände vorhanden, wodurch sich insgesamt drei voneinander getrennte Bereiche im Sumpf der Absorptionskolonne ergeben, nämlich ein erster zentrischer zylindrischer innerer Bereich, ein ringförmiger zweiter mittlerer Bereich, der den inneren Bereich ringförmig umgibt und ein dritter radial äußerer ebenfalls ringförmiger Bereich, der wiederum den zweiten mittleren Bereich ringförmig umgibt. Bei dieser konstruktiven Variante der Anlage ist es daher möglich, den zweiten und den dritten Bereich so abzudecken, dass die anfangs von den unteren Siebböden abregnende konzentrierte Salpetersäure zunächst nur in den inneren ringförmigen Bereich einläuft, dann durch Überlaufen die weniger konzentrierte Salpetersäure in den zweiten mittleren Bereich gelangt, und danach, wenn auch dieser zweite mittlere Bereich gefüllt ist, die noch weniger konzentrierte Salpetersäure durch Überlaufen des zweiten mittleren Bereichs in den dritten radial äußeren Bereich gelangt, so dass man drei verschiedene Volumina mit jeweils unterschiedlich stark konzentrierten Salpetersäuren im Sumpf der Absorptionskolonne erhält, die man jeweils getrennt aus diesen Bereichen abziehen kann.

In entsprechender Weise können auch weitere Trennwände vorgesehen sein, wodurch sich vier oder mehr als vier voneinander getrennte Bereiche ergeben, in denen Salpetersäure mit jeweils unterschiedlicher Konzentration aufgefangen wird. Bei mehr als zwei zylindrischen Trennwänden ist somit eine erste, radial innere Trennwand konzentrisch mit radialem Abstand zur äußeren Wandung im Kolonnensumpf angeordnet, eine zweite, radial weiter außen liegende Trennwand ist konzentrisch und mit radialem Abstand zu der ersten Trennwand angeordnet und eine dritte, gegebenenfalls eine vierte oder weitere Trennwände ist (sind) konzentrisch zu der zweiten Trennwand und zwischen der zweiten Trennwand und der äußeren Wandung des Kolonnensumpfs angeordnet.

Gemäß einer möglichen alternativen konstruktiven Variante der erfindungsgemäßen Anlage sind wenigstens zwei zueinander parallele Trennwände vorgesehen, die den Kolonnensumpf in einen rechteckigen, radial inneren und zwei segmentförmige, radial äußere Bereiche unterteilen. Bei dieser Variante ersetzen die beiden zueinander parallelen geradlinigen Trennwände eine durchgehende zylindrische Trennwand. Aufgrund der zylindrischen Geometrie der äußeren Wandung des Absorptionsturms ergeben sich dann jenseits des inneren rechteckigen Bereichs zwei segmentförmige radial äußere Bereiche, in denen die weniger konzentrierte Salpetersäure aufgefangen wird. Bei dieser konstruktiven Variante sind somit die voneinander getrennten Bereiche nicht konzentrisch zueinander. Das zuvor beschriebene Funktionsprinzip der voneinander getrennten Bereiche, bei denen zunächst der mittlere Bereich mit konzentrierte Salpetersäure gefüllt wird und danach die weniger konzentrierte Salpetersäure in vom mittleren Bereich abgetrennte äußere Bereiche überläuft, ist jedoch auch bei dieser Variante gegeben.

Auch bei der zuvor genannten Variante können weitere, radial weiter außen liegende, bevorzugt parallel zu den radial weiter innen liegenden Trennwänden verlaufende Trennwände vorgesehen sein, die weitere Bereiche abtrennen, so dass sich insgesamt drei, vier oder mehr voneinander getrennte Bereiche ergeben.

Gemäß einer bevorzugten Weiterbildung der Erfindung ist bei der erfindungsgemäßen Anlage oberhalb einer ersten Trennwand oder bei mehreren Trennwänden oberhalb der radial äußeren Trennwände eine Abdeckung vorgesehen, die zur Mitte des Kolonnensumpfs hin eine Neigung in einem Winkel zur Horizontalen aufweist, wobei diese Abdeckung so dimensioniert ist, dass sie den Mantelraum zwischen der ersten Trennwand oder den radial äußeren Trennwänden und der äußeren Wandung des Kolonnensumpfs vollständig überdeckt. Durch diese Maßnahme wird verhindert, dass anfänglich von den unteren Siebböden ablaufende Salpetersäure in den oder in die radial äußeren Bereiche fließt. Zunächst gelangt so die konzentrierte Salpetersäure zunächst in den mittigen Bereich, so dass aus diesem konzentrierte Salpetersäure abgezogen werden kann. Die radial äußeren Bereiche sind für ein unmittelbares Einlaufen direkt von oben her abgedeckt und erst wenn der mittige Bereich mit Salpetersäure gefüllt ist und weitere, jetzt weniger konzentrierte Salpetersäure von oben her nachläuft, kann diese durch Überströmen über die Trennwand in einen radial weiter außen liegenden Bereich einlaufen.

Gemäß einer bevorzugten Weiterbildung der erfindungsgemäßen Anlage geht daher wenigstens eine erste Leitung für Salpetersäure vom ersten radial inneren Bereich aus, um aus diesem Salpetersäure abzuziehen und wenigstens eine weitere, von der ersten Leitung separate Leitung für Salpetersäure geht von wenigstens einem zweiten, radial äußeren Bereich aus, um aus diesem zweiten Bereich Salpetersäure abzuziehen. Auf diese Weise können aus den voneinander getrennten Bereichen Salpetersäurevolumina mit unterschiedlichen Konzentrationen jeweils separat abgezogen werden.

Durch die erfindungsgemäße Verwendung zusätzlicher Einbauten in Form der vorgenannten Trennwände im Sumpf der Absorptionskolonne wird erreicht, dass die abgeregnete Salpetersäure getrennt gewonnen werden kann. Dadurch ist es möglich die höher konzentrierte Salpetersäure, die von den unteren Böden zuerst abregnet, weiter zu verwenden und beim nächsten Starten der Anlage wieder auf die unteren Siebböden aufzugeben.

Die zusätzlichen Einbauten bestehen vorzugsweise aus einem zylindrischen Teil und einer leicht nach innen geneigten Abdeckung oberhalb des sich ergebenden äußeren Spalts, der sich zwischen der Trennwand und der äußeren Wandung der Absorptionskolonne erstreckt.

Das Volumen des inneren Sumpfes wird so gewählt, dass durch das Auffangen der Säure aus der entsprechenden Anzahl Böden im inneren Sumpf die gewünschte Konzentration erreicht wird. Das Volumen des äußeren Sumpfs wird so gewählt, dass die restliche Säure auf den Böden im äußeren Sumpf aufgefangen wird. Hier kann beispielsweise ein zusätzlicher Sicherheitsaufschlag für wiederholte Anfahrversuche gewährt werden.

Die abregnende Salpetersäure der unteren Böden fließt dabei zunächst in den inneren zylindrischen oder etwa rechteckigen Bereich. Hier liegt Salpetersäure mit höherer Konzentration (beispielsweise mit 45 Gew.-% innerer Sumpf bis ca. 2 Gew.-% äußerer Sumpf) vor. Die Säurekonzentration wird anhand des gewünschten Absorberprofils festgelegt.

Der innere, vorzugsweise zylindrische oder etwa rechteckige Bereich wird dabei so dimensioniert, dass das Aufnahmevolumen die Flüssigkeitsvolumina der gewünschten Böden (also bis zur gewünschten Konzentration) aufnehmen kann. Weiter abregnende Flüssigkeit läuft weiter zu, überfüllt aber den inneren Zylinder und läuft in den sich ergebenden äußeren Spalt über. Die Durchmischung von schwacher, überlaufender Salpetersäure mit höher konzentrierter Salpetersäure findet dabei im Wesentlichen nur im obersten Bereich des Zylinders statt.

Im Allgemeinen ist das Volumen und die damit resultierende Aufteilung der Salpetersäurekonzentration von Anlage zu Anlage individuell. Es richtet sich nach dem Design des Absorptionsturms.

Auf diese Weise lässt sich ein Teil der Salpetersäure ohne zusätzlichen apparativen Aufwand wiederverwenden und es wird keine oder weniger konzentrierte Salpetersäure zum Anfahren der Anlage benötigt.

Als mögliche Ausführungsformen sollen darüber hinaus alle Volumina-Kombinationen vom Schutzumfang der vorliegenden Erfindung erfasst sein, das heißt der äußere Ring mit den Trennblechen soll weiter nach innen gezogen werden können, so dass das gesammelte Volumen höher konzentrierter Säure geringer wird und das nieder konzentrierte Volumen ansteigt. Darüber hinaus soll die Höhe der Abtrennung zwischen äußerer und innere Kammer variabel sein. Zudem sollen mehrere Kammern umfasst sein, das heißt eine mehrere Konzentrationsprofile umfassende Sumpfabtrennung, wenn weitere Trennwände installiert werden. Diese lägen bevorzugt in niedrigeren Höhen vor als die erste Wand. Die Anzahl der weiteren Trennwände sowie ihre jeweilige Höhe ist nicht limitiert.

Gegenstand der vorliegenden Erfindung ist weiterhin eine Anlage zur Herstellung von Salpetersäure, insbesondere nach einem Verfahren der zuvor beschriebenen Art, umfassend einen Absorptionsturm mit den zuvor beschriebenen Merkmalen.

Gegenstand der vorliegenden Erfindung ist außerdem ein Verfahren zur Herstellung von Salpetersäure nach dem Ostwald-Verfahren, umfassend einen Verfahrensschritt, in dem eine Absorption von gasförmigen Stickstoffoxiden in Wasser zur Erzeugung von Salpetersäure in einem Absorptionsturm erfolgt, wobei die Stickstoffoxide in einem unteren Bereich in den Absorptionsturm eingeleitet werden und Wasser in einem oberen Bereich in den Absorptionsturm eingeleitet wird, wobei die sich bildende Salpetersäure über eine Mehrzahl übereinander angeordneter, zueinander jeweils beabstandeter Siebböden nach unten strömt und die Stickstoffoxide im Gegenstrom zu der wässrigen Flüssigkeit den Absorptionsturm von unten nach oben durchströmen, wobei sich im Kolonnensumpf des Absorptionsturms konzentrierte Salpetersäure ansammelt, wobei erfindungsgemäß durch Einbauten im Kolonnensumpf, insbesondere durch wenigstens eine Trennwand im Kolonnensumpf wenigstens zwei voneinander abgetrennte Bereiche geschaffen werden, in denen unterschiedlich stark konzentrierte Salpetersäure aufgefangen wird, wobei durch wenigstens eine Abdeckung oberhalb eines der abgetrennten Bereiche erreicht wird, dass von den Siebböden zuerst ablaufende Salpetersäure nur in einen der abgetrennten Bereiche einströmt.

Gemäß einer bevorzugten Weiterbildung des erfindungsgemäßen Verfahrens wird von den Siebböden ablaufende konzentrierte Salpetersäure zunächst in einem ersten zentrischen Bereich des Kolonnensumpfs aufgefangen und erst nach vollständiger Füllung dieses ersten zentrischen Bereichs gelangt weniger stark konzentrierte Salpetersäure durch Überströmen über eine vorzugsweise ringzylindrische oder geradlinige Trennwand in wenigstens einen radial weiter außen liegenden, von dem ersten Bereich abgetrennten zweiten Bereich.

Gemäß einer bevorzugten Weiterbildung des Verfahrens gelangt nach vollständiger Füllung des zweiten, radial weiter außen liegenden Bereichs weniger stark konzentrierte Salpetersäure durch Überströmen über eine weitere, vorzugsweise ringzylindrische oder geradlinige Trennwand in einen radial noch weiter außen liegenden, von dem zweiten Bereich abgetrennten dritten Bereich.

Eine bevorzugte Weiterbildung des Verfahrens sieht vor, dass durch die jeweilige Position der Trennwand oder Trennwände im Kolonnensumpf und der Abdeckung oberhalb der abgetrennten Bereiche das Verhältnis der Volumina an hergestellter stärker konzentrierter zu weniger konzentrierter Salpetersäure bestimmt wird.

Das vorgenannte Verfahren zur Herstellung von Salpetersäure wird vorzugsweise in einer Anlage umfassend einen Absorptionsturm mit den zuvor beschriebenen Merkmalen durchgeführt.

Nachfolgend wird die vorliegende Erfindung anhand zweier Ausführungsbeispiele unter Bezugnahme auf die beiliegenden Zeichnungen näher beschrieben. Dabei zeigen:
Figur 1 eine schematisch vereinfachte Darstellung eines Absorptionsturms einer beispielhaften erfindungsgemäßen Anlage zur Herstellung von Salpetersäure;
Figur 2 eine schematisch vereinfachte Darstellung des unteren Bereichs eines Absorptionsturms gemäß einer alternativen Ausführungsvariante einer beispielhaften Anlage zur Herstellung von Salpetersäure gemäß der vorliegenden Erfindung.

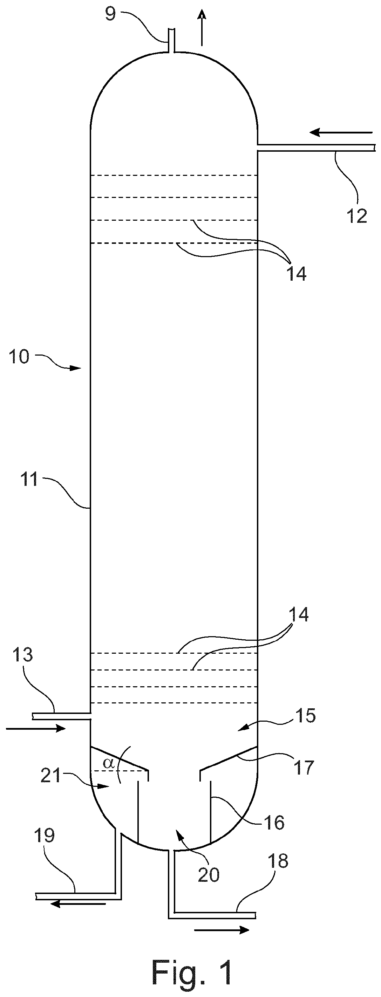

Nachfolgend wird zunächst auf die Figur 1 Bezug genommen und anhand dieser Darstellung wird eine erste beispielhafte Ausführungsvariante der Erfindung näher erläutert. Die Darstellung des Absorptionsturm 10 in Figur 1 ist schematisch stark vereinfacht und es sind nur diejenigen Anlagenkomponenten dargestellt, die im Rahmen der vorliegenden Erfindung von Bedeutung sind. In Figur 1 ist nur der Absorptionsturm 10 dargestellt. Die übrigen Anlagenteile einer Anlage zur Herstellung von Salpetersäure, die hier nicht gezeigt sind, sind an sich bekannt, ebenso wie die Einbindung des Absorptionsturms in die Gesamtanlage zur Herstellung von Salpetersäure an sich bekannt ist und daher nicht näher beschrieben wird.

Der erfindungsgemäße Absorptionsturm 10 ist eine Kolonne mit einer grundsätzlich zylindrischen Geometrie, wobei die Kolonne im Kopfbereich sowie im Bereich des Sumpfs 15 als jeweils endseitig abgerundeter Behälter ausgeführt sein kann. In einem oberen Bereich wird Prozesswasser über eine Zuführleitung 12 in den Absorptionsturm 10 gegeben und in einem unteren Bereich werden über eine Zuführleitung 13 NOx-Gase bzw. Säurekondensat dem Absorptionsturm 10 zugeführt, so dass diese NOx-Gase im Inneren des Absorptionsturms 10 im Gegenstrom zu dem Wasser strömen, welches von oben nach unten strömt. Das Restgas wird im Kopf des Absorptionsturms 10 über eine Leitung 9 abgeführt und wird dann weiter aufbereitet, was hier nicht näher dargestellt ist.

Im Inneren weist der Absorptionsturm eine größere Anzahl von beispielsweise zwanzig oder mehr, (typischerweise 25 bis 40) Siebböden 14 auf, die jeweils bevorzugt horizontal eingebaut sind und mit Abstand zueinander parallel übereinander angeordnet sind. Zur Vereinfachung sind in Figur 1 nur einige dieser Siebböden dargestellt. Das einströmende Prozesswasser gelangt zunächst auf den obersten Siebboden und strömt von diesem ausgehend sukzessive weiter nach unten auf die weiteren Siebböden. Die NO_{X}-Gase steigen im Absorptionsturm auf, strömen durch die Perforationen der Siebböden 14 nach oben und gelangen dadurch in Kontakt mit der auf den Siebböden 14 stehenden wässrigen Flüssigkeit, in der sie absorbiert werden, wodurch sich Salpetersäure ausbildet. Im stationären Betrieb bildet sich innerhalb des Absorptionsturms 10 ein Konzentrationsprofil aus, wobei die Konzentration der auf den Siebböden stehenden Salpetersäure von oben nach unten hin zunimmt. Durch den Druck der von unten nach oben strömenden NOx-Gase bildet sich auf den Siebböden jeweils eine Flüssigkeitssäule aus. Wenn jedoch bei abschalten der Anlage dieser Gasdruck abnimmt, führt dies dazu, dass die Salpetersäure durch die Perforationen der Siebböden nach unten hin abregnet.

In Figur 1 ist nun eine erste vereinfachte Lösungsvariante der Erfindung dargestellt, bei der im Sumpf 15 der Absorptionskolonne 10 unterhalb der untersten Siebböden 14 in einem etwa mittigen Bereich eine zylindrische Trennwand 16 eingebaut ist, die bevorzugt vertikal verläuft und einen ersten mittleren, radial inneren Bereich 20 des Sumpfs 15 von einem ringförmigen zweiten, radial äußeren Bereich 21 des Sumpfs abtrennt. Oberhalb der Trennwand 16, mit etwas Abstand zu dieser, ist in einem radial äußeren Bereich eine Abdeckung 17 angeordnet, die ringsum läuft, mit der äußeren zylindrischen Wandung 11 des Absorptionsturms 10 verbunden ist sich von dort aus soweit radial einwärts erstreckt, dass sie in der Projektion auf die Horizontalebene den zweiten radial äußeren Bereich 21 vollständig überdeckt. Diese Abdeckung, die beispielsweise in Form eines Abdeckblechs oder dergleichen aus einem säurefesten Material ausgebildet sein kann, verläuft in einem Winkel α zur Horizontalen geneigt von radial außen nach radial innen, so dass Salpetersäure, die von den über der Abdeckung 17 liegenden Siebböden 14 abregnet, zunächst über die Abdeckung 17 einwärts strömt und dann ausschließlich in den ersten radial inneren Bereich 20 fließt, da der zweite radial äußere Bereich 21 von der Abdeckung 17 überdeckt ist. Dieser erste mittlere Bereich 20 ist mit einer Abführleitung 18 versehen, so dass konzentrierte Salpetersäure, die sich in dem ersten mittleren Bereich 20 ansammelt über diese erste Abführleitung 18 getrennt abgeführt werden kann.

Wenn die Anlage abgeschaltet oder heruntergefahren wird, regnet zunächst die Salpetersäure von den unteren Siebböden 14 ab, die am konzentriertesten ist, so dass in den mittleren Bereich 20 überwiegend konzentrierte Salpetersäure gelangt, die beim wieder Anfahren der Anlage wieder auf die unteren Siebböden gegeben werden kann, um so die Anfangsphase, in der die Anlage nur verdünnte Salpetersäure produziert, zu verkürzen. Erst wenn beim Herunterfahren der Anlage eine solche Menge an Salpetersäure von den unteren Siebböden abgelaufen ist, dass das erste Volumen des ersten mittleren Bereichs 20 gefüllt ist, läuft die dann weiter von den Siebböden 14 ablaufende Salpetersäure, deren Konzentration allmählich abnimmt, über das obere Ende der Trennwand 16 über und gelangt so in den zweiten radial äußeren Bereich 21. Dieser zweite Bereich ist ebenfalls mit einer Abführleitung 19 versehen, so dass die weniger konzentrierte Salpetersäure, die sich in diesem zweiten Bereich 21 ansammelt, über die Abführleitung 19 separat aus dem Sumpf 15 des Absorptionsturms 10 abgeführt werden kann.

Die im Absorptionsturm 10 erzeugte Salpetersäure, die über die beiden Abführleitungen 18, 19 abgeführt wird, wird anschließend in der Regel in an sich bekannter Weise einem Bleichturm zugeführt, in dem die Salpetersäure gereinigt wird, was hier nicht näher dargestellt ist.

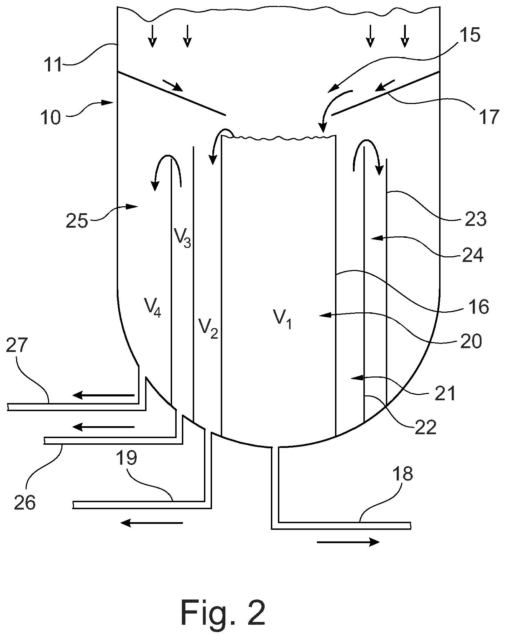

Nachfolgend wird unter Bezugnahme auf die Figur 2 eine zweite alternative Variante der vorliegenden Erfindung näher erläutert. Bei diesem weiteren Ausführungsbeispiel ist nur der untere Bereich mit dem Sumpf 15 eines Absorptionsturms 10 in gegenüber Figur 1 vergrößertem Maßstab dargestellt. Im Unterschied zu der Variante von Figur 1 sind bei der Ausführungsform gemäß Figur 2 insgesamt drei Trennwände 16, 22, 23 vorgesehen, wobei diese beispielsweise ringzylindrisch ausgebildet sind und konzentrisch ineinander liegen. Durch die radial innere Trennwand 16 wird ähnlich wie bei der Variante von Figur 1 ein erster mittlerer Bereich 20 von einem zweiten radial weiter außen liegenden Bereich 21 abgetrennt, welcher den ersten mittleren Bereich 20 ringförmig umgibt. Eine weitere Trennwand 22 trennt diesen zweiten Bereich 21 außenseitig von einem radial noch weiter außen liegenden dritten Bereich 24 ab, welcher wiederum den zweiten Bereich 21 außenseitig ringförmig umgibt. Schließlich ist eine dritte Trennwand 23 vorhanden, die radial noch weiter außen liegt und den dritten Bereich 24 von einem äußeren vierten Bereich 25 abtrennt, welcher den dritten Bereich 24 außenseitig ringförmig umgibt und welcher nach außen hin von der äußeren Wandung 11 des Absorptionsturms 10 begrenzt wird.

**Sobald der** erste innere Bereich 20 mit konzentrierter Salpetersäure gefüllt ist, läuft diese über die erste Trennwand 16 über in den zweiten Bereich 21. Wenn auch dieser mit Salpetersäure gefüllt wird, läuft diese über die Trennwand 22 über in den dritten Bereich 24 und schließlich läuft die Salpetersäure, wenn auch der dritte Bereich 24 gefüllt ist über die Trennwand 23 in den vierten äußeren Bereich 25 über. Wie in dem Ausführungsbeispiel erkennbar ist, können die einzelnen voneinander über die Trennwände abgetrennten Bereiche unterschiedliche Volumina aufweisen, was abhängig ist von der radialen Breite des jeweiligen Bereichs und von der jeweiligen Abstandsposition zum Mittelpunkt des Absorptionsturms. Durch die Wahl der jeweiligen Position der einzelnen Trennwände 16, 22, 23 kann man somit bestimmen, wie groß die in den Bereichen erhältlichen Volumina der unterschiedlich konzentrierten Säuren sein sollen. In dem ersten mittleren Bereich wird ein Flüssigkeitsvolumen V₁ aufgenommen, in dem zweiten Bereich ein Flüssigkeitsvolumen V₂, in dem dritten Bereich ein Flüssigkeitsvolumen V₃ und in dem vierten radial äußeren Bereich ein Flüssigkeitsvolumen V₄ und die Flüssigkeitsvolumina V₁ bis V₄ können alle unterschiedlich groß sein.

Jeder der vier genannten abgetrennten Bereiche ist bevorzugt jeweils mit einer separaten Leitung 18, 19, 26, 27 versehen, über die man die Salpetersäure abführen kann. Wie weiterhin in Figur 2 erkennbar ist, nimmt die Höhe der Trennwände jeweils von radial innen nach außen im Absorptionsturm ab, so dass bei gefülltem zweiten Bereich 21 die Salpetersäure in den radial weiter außen liegenden dritten Bereich 24 überströmt und nicht zurück in den ersten inneren Bereich 20 strömen kann.

### Bezugszeichenliste

- 9: Leitung für Restgas
- 10: Absorptionsturm, Absorptionskolonne
- 11: äußere zylindrische Wandung
- 12: Zuführleitung für Prozesswasser
- 13: Zuführleitung für NOx-Gase
- 14: Siebböden
- 15: Kolonnensumpf
- 16: Trennwand
- 17: Abdeckung
- 18: Abführleitung für konzentrierte Salpetersäure
- 19: Abführleitung für weniger konzentrierte Salpetersäure
- 20: erster radial innerer Bereich
- 21: zweiter radial äußerer Bereich
- 22: mittlere Trennwand
- 23: äußere Trennwand
- 24: dritter ringförmiger Bereich
- 25: vierter äußerer ringförmiger Bereich
- 26: Leitung für abzuführende Salpetersäure
- 27: Leitung für abzuführende Salpetersäure

## Patentansprüche

1. Absorptionsturm (10) für eine Anlage zur Herstellung von Salpetersäure nach dem Ostwald-Verfahren, umfassend eine Mehrzahl übereinander angeordneter, zueinander jeweils beabstandeter Siebböden (14), einen Einlass (12) für Wasser in einem oberen Bereich des Absorptionsturms, einen Einlass (13) für gasförmige Stickstoffoxide in einem unteren Bereich des Absorptionsturms (10) sowie einen im unteren Endbereich des Absorptionsturms unterhalb des untersten Siebbodens (14) angeordneten Kolonnensumpf (15), welcher durch wenigstens eine Trennwand (16) in wenigstens zwei voneinander getrennte Bereiche (20, 21) unterteilt ist, **dadurch gekennzeichnet, dass** wenigstens eine Trennwand (16) mit einem derartigen Verlauf angeordnet ist, dass sie den Kolonnensumpf (15) in einen ersten, radial inneren (20) und wenigstens einen zweiten, radial äußeren (21) Bereich unterteilt.

2. Absorptionsturm nach Anspruch 1, **dadurch gekennzeichnet, dass** die wenigstens eine Trennwand (16) wenigstens abschnittsweise zylindrisch ausgebildet ist.

3. Absorptionsturm nach Anspruch 2, **dadurch gekennzeichnet, dass** die wenigstens eine Trennwand (16) konzentrisch mit radialem Abstand zur äußeren Wandung (11) im Kolonnensumpf (15) angeordnet ist und den Kolonnensumpf in einen ersten zylindrischen zentrischen Bereich (20) innerhalb der Trennwand (16) und einen zweiten, ringförmigen radial äußeren Bereich (21) außerhalb der Trennwand (16) unterteilt.

4. Absorptionsturm nach Anspruch 2 oder 3, **dadurch gekennzeichnet, dass** eine erste, radial innere Trennwand (16) konzentrisch mit radialem Abstand zur äußeren Wandung (11) im Kolonnensumpf (15) angeordnet ist und wenigstens eine zweite, radial äußere Trennwand (22) konzentrisch und mit radialem Abstand zu der ersten Trennwand (16) und zwischen der radial inneren Trennwand (16) und der äußeren Wandung (11) des Kolonnensumpfs (15) angeordnet ist.

5. Absorptionsturm nach Anspruch 4, **dadurch gekennzeichnet, dass** eine erste, radial innere Trennwand (16) konzentrisch mit radialem Abstand zur äußeren Wandung (11) im Kolonnensumpf (15) angeordnet ist, eine zweite, radial weiter außen liegende Trennwand (22) konzentrisch und mit radialem Abstand zu der ersten Trennwand (16) angeordnet ist und eine dritte (23), gegebenenfalls eine vierte oder weitere Trennwände konzentrisch zu der zweiten Trennwand (22) und zwischen der zweiten Trennwand (22) und der äußeren Wandung (11) des Kolonnensumpfs (15) angeordnet ist (sind).

6. Absorptionsturm nach Anspruch 1, **dadurch gekennzeichnet, dass** wenigstens zwei zueinander parallele Trennwände vorgesehen sind, die den Kolonnensumpf (15) in einen rechteckigen radial inneren und zwei segmentförmige radial äußere Bereiche unterteilen.

7. Absorptionsturm nach Anspruch 6, **dadurch gekennzeichnet, dass** wenigstens vier zueinander parallele Trennwände vorgesehen sind, die den Kolonnensumpf (15) in einen rechteckigen radial inneren Bereich, zwei mittlere Bereiche und zwei segmentförmige radial äußere Bereiche unterteilen.

8. Absorptionsturm nach einem der Ansprüche 4, 5 oder 7, **dadurch gekennzeichnet, dass** die zweite, radial äußere Trennwand (22) sich weniger weit nach oben hin erstreckt als die erste, radial innere Trennwand (16) oder radial weiter außen liegende Trennwände sich weniger weit nach oben hin erstrecken als radial weiter innen liegende Trennwände.

9. Absorptionsturm nach Anspruch 5 oder 6, **dadurch gekennzeichnet, dass** die dritte, radial weiter außen liegende Trennwand (23) weniger hoch ist als die zweite, radial weiter innen liegende Trennwand (22) oder die vierte oder gegebenenfalls weitere radial außen liegende Trennwände jeweils niedriger sind als die dritte, gegebenenfalls die zweite, jeweils radial weiter innen liegenden Trennwände.

10. Absorptionsturm nach einem der Ansprüche 1 bis 9, **dadurch gekennzeichnet, dass** oberhalb einer ersten Trennwand (16) oder bei mehreren Trennwänden oberhalb der radial äußeren Trennwände (22, 23) eine Abdeckung (17) vorgesehen ist, die zur Mitte des Kolonnensumpfs hin eine Neigung in einem Winkel zur Horizontalen aufweist, wobei diese Abdeckung (17) so dimensioniert ist, dass sie den Mantelraum zwischen der ersten Trennwand (16) oder den radial äußeren Trennwänden und der äußeren Wandung (11) des Kolonnensumpfs (15) vollständig überdeckt.

11. Absorptionsturm nach einem der Ansprüche 1 bis 10, **dadurch gekennzeichnet, dass** im oberen Endbereich an wenigstens einer Trennwand eine Abdeckung angeordnet ist, welche wenigstens abschnittsweise zur Mitte des Kolonnensumpfs hin eine Neigung in einem Winkel zur Horizontalen aufweist.

12. Absorptionsturm nach Anspruch 11, **dadurch gekennzeichnet, dass** bei zwei, drei, vier oder mehr Trennwänden im oberen Endbereich an jeder Trennwand jeweils eine Abdeckung angeordnet ist, welche wenigstens abschnittsweise zur Mitte des Kolonnensumpfs hin eine Neigung in einem Winkel zur Horizontalen aufweist.

13. Absorptionsturm nach einem der Ansprüche 11 oder 12, **dadurch gekennzeichnet, dass** die Abdeckung so dimensioniert ist, dass sie den Spalt, insbesondere den Ringspalt zwischen einer radial weiter innen liegenden Trennwand und einer zu dieser benachbarten radial weiter außen liegenden Trennwand nur teilweise und zwar im radial innen liegendem Bereich des Ringspalts überdeckt.

14. Absorptionsturm nach einem der Ansprüche 1 bis 13, **dadurch gekennzeichnet, dass** wenigstens eine erste Leitung (18) für Salpetersäure vom ersten radial inneren Bereich (20) ausgeht, um aus diesem Salpetersäure abzuziehen und wenigstens eine weitere, von der ersten Leitung separate Leitung (19) für Salpetersäure von wenigstens einem zweiten, radial äußeren Bereich (21) ausgeht, um aus diesem zweiten Bereich Salpetersäure abzuziehen.

15. Anlage zur Herstellung von Salpetersäure, **dadurch gekennzeichnet, dass** diese einen Absorptionsturm (10) mit den Merkmalen eines der Ansprüche 1 bis 14 umfasst.

16. Verfahren zur Herstellung von Salpetersäure nach dem Ostwald-Verfahren, umfassend einen Verfahrensschritt, in dem eine Absorption von gasförmigen Stickstoffoxiden in Wasser zur Erzeugung von Salpetersäure in einem Absorptionsturm (10) erfolgt, wobei die Stickstoffoxide in einem unteren Bereich in den Absorptionsturm eingeleitet werden und Wasser in einem oberen Bereich in den Absorptionsturm eingeleitet wird, wobei die sich bildende Salpetersäure über eine Mehrzahl übereinander angeordneter, zueinander jeweils beabstandeter Siebböden (14) nach unten strömt und die Stickstoffoxide im Gegenstrom zu der wässrigen Flüssigkeit den Absorptionsturm von unten nach oben durchströmen, wobei sich im Kolonnensumpf (15) des Absorptionsturms (10) konzentrierte Salpetersäure ansammelt, **dadurch gekennzeichnet, dass** durch Einbauten im Kolonnensumpf (15), insbesondere durch wenigstens eine Trennwand (16) im Kolonnensumpf wenigstens zwei voneinander abgetrennte Bereiche (20, 21) geschaffen werden, in denen unterschiedlich stark konzentrierte Salpetersäure aufgefangen wird, wobei durch wenigstens eine Abdeckung (17) oberhalb eines der abgetrennten Bereiche (21) erreicht wird, dass von den Siebböden (14) zuerst ablaufende Salpetersäure nur in einen der abgetrennten Bereiche (20) einströmt.

17. Verfahren zur Herstellung von Salpetersäure nach Anspruch 16, **dadurch gekennzeichnet, dass** von den Siebböden (14) ablaufende konzentrierte Salpetersäure in einem ersten zentrischen Bereich (20) des Kolonnensumpfs (15) aufgefangen wird und erst nach vollständiger Füllung dieses ersten zentrischen Bereichs (20) weniger stark konzentrierte Salpetersäure durch Überströmen über eine vorzugsweise ringzylindrische oder geradlinige Trennwand (16) in wenigstens einen radial weiter außen liegenden, von dem ersten Bereich (20) abgetrennten zweiten Bereich (21) gelangt.

18. Verfahren zur Herstellung von Salpetersäure nach Anspruch 17, **dadurch gekennzeichnet, dass** nach vollständiger Füllung des zweiten, radial weiter außen liegenden Bereichs (21) weniger stark konzentrierte Salpetersäure durch Überströmen über eine weitere, vorzugsweise ringzylindrische Trennwand (22) in einen radial noch weiter außen liegenden, von dem zweiten Bereich (21) abgetrennten dritten Bereich (24) gelangt.

19. Verfahren zur Herstellung von Salpetersäure nach einem der Ansprüche 16 bis 18, **dadurch gekennzeichnet, dass** durch die jeweilige Position der Trennwand (16) oder Trennwände (16, 22, 23) im Kolonnensumpf und der Abdeckung (17) oberhalb der abgetrennten Bereiche das Verhältnis der Volumina (V₁, V₂, V₃, V₄) an hergestellter stärker konzentrierter zu weniger konzentrierter Salpetersäure bestimmt wird.

20. Verfahren zur Herstellung von Salpetersäure nach einem der Ansprüche 16 bis 18, **dadurch gekennzeichnet, dass** dieses in einer Anlage umfassend einen Absorptionsturm (10) mit den Merkmalen eines der Ansprüche 1 bis 14 durchgeführt wird.

## Claims

1. An absorption tower (10) for a plant for production of nitric acid by the Ostwald method, comprising a multitude of sieve trays (14) arranged one on top of another and each spaced apart from one another, an inlet (12) for water in an upper region of the absorption tower, an inlet (13) for gaseous nitrogen oxides in a lower region of the absorption tower (10), and a column bottom (15) which is disposed in the lower end region of the absorption tower beneath the lowermost sieve tray (14) and is divided by at least one dividing wall (16) into at least two mutually separated regions (20, 21), **characterized in that** at least one dividing wall (16) is arranged with such a progression that it divides the column bottom (15) into a first, radially inner region (20) and at least a second, radially outer region (21).

2. The absorption tower as claimed in claim 1, **characterized in that** the at least one dividing wall (16) is cylindrical at least in sections.

3. The absorption tower as claimed in claim 2, **characterized in that** the at least one dividing wall (16) is disposed in the column bottom (15) in a concentric arrangement with a radial distance from the outer wall (11) and divides the column bottom into a first cylindrical central region (20) within the dividing wall (16) and a second annular radially outer region (21) outside the dividing wall (16).

4. The absorption tower as claimed in claim 2 or 3, **characterized in that** a first, radially inner dividing wall (16) is disposed in the column bottom (15) in a concentric arrangement with a radial distance from the outer wall (11) and at least one second, radially outer dividing wall (22) is disposed in a concentric arrangement with a radial distance from the first dividing wall (16) and between the radially inner dividing wall (16) and the outer wall (11) of the column bottom (15).

5. The absorption tower as claimed in claim 4, **characterized in that** a first, radially inner dividing wall (16) is disposed in the column bottom (15) in a concentric arrangement with a radial distance from the outer wall (11), a second dividing wall (22) which is radially further outward is disposed in a concentric arrangement with a radial distance from the first dividing wall (16), and a third (23) and optionally fourth or further dividing walls is/are arranged concentrically to the second dividing wall (22) and between the second dividing wall (22) and the outer wall (11) of the column bottom (15).

6. The absorption tower as claimed in claim 1, **characterized in that** at least two mutually parallel dividing walls are provided, which divide the column bottom (15) into one rectangular, radially inner region and two segment-shaped radially outer regions.

7. The absorption tower as claimed in claim 6, **characterized in that** at least four mutually parallel dividing walls are provided, which divide the column bottom (15) into one rectangular, radially inner region, two middle regions and two segment-shaped radially outer regions.

8. The absorption tower as claimed in any of claims 4, 5 or 7, **characterized in that** the second, radially outer dividing wall (22) extends less far in the upward direction than the first, radially inner dividing wall (16), or dividing walls that are radially further outward extend less far in the upward direction than dividing walls that are radially further inward.

9. The absorption tower as claimed in claim 5 or 6, **characterized in that** the third dividing wall (23) radially further outward is less high than the second dividing wall (22) radially further inward, or the fourth or if applicable further dividing walls radially outward are each lower than the third, and if applicable than the second, dividing walls that are respectively radially further inward.

10. The absorption tower as claimed in any of claims 1 to 9, **characterized in that** a cover (17) is provided above a first dividing wall (16) or, in the case of multiple dividing walls, above the radially outer dividing walls (22, 23), which has an inclination at an angle to the horizontal toward the middle of the column bottom, where the dimensions of this cover (17) are such that it fully covers the shell space between the first dividing wall (16) or the radially outer dividing walls and the outer wall (11) of the column bottom (15).

11. The absorption tower as claimed in any of claims 1 to 10, **characterized in that** a cover is disposed in the upper end region at at least one dividing wall, which has an inclination at an angle to the horizontal toward the middle of the column bottom at least in sections.

12. The absorption tower as claimed in claim 11, **characterized in that,** in the case of two, three, four or more dividing walls, a cover is disposed on each dividing wall in the upper end region, which has an inclination at an angle to the horizontal toward the middle of the column bottom at least in sections.

13. The absorption tower as claimed in either of claims 11 and 12, **characterized in that** the dimensions of the cover are such that it only partly covers the gap, especially the annular gap, between a dividing wall radially further inward and a dividing wall which is adjacent thereto and is radially further outward, specifically in the radially inner region of the annular gap.

14. The absorption tower as claimed in any of claims 1 to 13, **characterized in that** at least one first conduit (18) for nitric acid proceeds from the first radially inner region (20) in order to draw off nitric acid therefrom, and at least one further conduit (19) for nitric acid separate from the first conduit proceeds from at least one second, radially outer region (21) in order to draw off nitric acid from this second region.

15. A plant for production of nitric acid, **characterized in that** it comprises an absorption tower (10) having the features of any of claims 1 to 14.

16. A process for producing nitric acid by the Ostwald process, comprising a process step in which absorption of gaseous nitrogen oxides in water takes place to produce nitric acid in an absorption tower (10), wherein the nitrogen oxides are introduced into the absorption tower in a lower region and water is introduced into the absorption tower in an upper region, wherein the nitric acid formed flows downward through a multitude of sieve trays (14) arranged one on top of another and each spaced apart from one another, and the nitrogen oxides flow upward from below through the absorption tower in countercurrent with the aqueous liquid, wherein in the column bottom (15) of the absorption tower (10), concentrated nitric acid accumulates, **characterized in that** by internals in the column bottom (15), especially by at least one dividing wall (16) in the column bottom, at least two mutually divided regions (20, 21) are created in which nitric acid of different concentration is collected, wherein by at least one cover (17) above one of the divided regions (21) the effect is achieved that nitric acid that effluxes first from the sieve trays (14) flows only into one of the divided regions (20).

17. The process for producing nitric acid as claimed in claim 16, **characterized in that** concentrated nitric acid effluxing from the sieve trays (14) is collected in a first, central region (20) of the column bottom (15), and only after this first central region (20) has filled completely, less concentrated nitric acid passes via overflow over a preferably circular cylindrical or linear dividing wall (16) into at least one second region (21) which is radially further outward and is divided from the first region (20).

18. The process for producing nitric acid as claimed in claim 17, **characterized in that,** after filling the second region (21) radially further outward completely, less concentrated nitric acid passes via overflow over a further, preferably circular cylindrical, dividing wall (22) into a third region (24) which is radially even further outward and is divided from the second region (21).

19. The process for producing nitric acid as claimed in any of claims 16 to 18, **characterized in that** the respective position of the dividing wall (16) or dividing walls (16, 22, 23) in the column bottom and of the cover (17) above the divided regions determines the ratio of the volumes (V₁, V₂, V₃, V₄) of more highly concentrated to less highly concentrated nitric acid produced.

20. The process for producing nitric acid as claimed in any of claims 16 to 18, **characterized in that** it is conducted in a plant comprising an absorption tower (10) having the features of any of claims 1 to 14.

## Revendications

1. Tour d'absorption (10) pour une installation de production d'acide nitrique selon le procédé Ostwald, comprenant une multitude de plateaux perforés (14) disposés les uns au-dessus des autres et espacés les uns des autres, une entrée (12) pour l'eau dans une région supérieure de la tour d'absorption, une entrée (13) pour les oxydes d'azote gazeux dans une région inférieure de la tour d'absorption (10), et un fond de colonne (15) qui est disposé dans la région d'extrémité inférieure de la tour d'absorption sous le plateau filtrant (14) le plus bas et qui est divisé par au moins une paroi de séparation (16) en au moins deux régions (20, 21) séparées l'une de l'autre, **caractérisée en ce qu'**au moins une paroi de séparation (16) est disposée de telle manière qu'elle divise le fond de colonne (15) en une première région (20) située radialement à l'intérieur et au moins une deuxième région (21) située radialement à l'extérieur. radialement intérieure (20) et au moins une deuxième zone radialement extérieure (21).

2. Tour d'absorption selon la revendication 1, **caractérisée en ce que** la au moins une paroi de séparation (16) est cylindrique au moins par sections.

3. Tour d'absorption selon la revendication 2, **caractérisée en ce que** la au moins une paroi de séparation (16) est disposée dans le fond de colonne (15) dans une disposition concentrique à une distance radiale de la paroi extérieure (11) et divise le fond de colonne en une première zone centrale cylindrique (20) à l'intérieur de la paroi de séparation (16) et une deuxième zone annulaire radialement extérieure (21) à l'extérieur de la paroi de séparation (16).

4. La tour d'absorption selon la revendication 2 ou 3, **caractérisée en ce qu'**une première paroi de séparation radiale intérieure (16) est disposée dans le fond de la colonne (15) dans une disposition concentrique à une distance radiale de la paroi extérieure (11) et au moins une deuxième paroi de séparation radiale extérieure (22) est disposée dans une disposition concentrique à une distance radiale de la première paroi de séparation (16) et entre la paroi de séparation radiale intérieure (16) et la paroi extérieure (11) du fond de la colonne (15).

5. La tour d'absorption selon la revendication 4, **caractérisée en ce qu'**une première paroi de séparation radiale interne (16) est disposée dans le fond de la colonne (15) dans une disposition concentrique à une distance radiale de la paroi extérieure (11), une deuxième paroi de séparation (22) qui est plus à l'extérieur dans le sens radial est disposée dans une disposition concentrique à une distance radiale de la première paroi de séparation (16), et une troisième (23) et éventuellement une quatrième ou d'autres parois de séparation sont disposées de manière concentrique par rapport à la deuxième paroi de séparation (22) et entre la deuxième paroi de séparation (22) et la paroi extérieure (11) du fond de la colonne (15).

6. Tour d'absorption selon la revendication 1, **caractérisée en ce qu'**au moins deux parois de séparation mutuellement parallèles sont prévues, qui divisent le fond de la colonne (15) en une zone rectangulaire radialement intérieure et deux zones segmentées radialement extérieures.

7. Tour d'absorption selon la revendication 6, **caractérisée en ce qu'**au moins quatre parois de séparation mutuellement parallèles sont prévues, qui divisent le fond de la colonne (15) en une région rectangulaire radiale intérieure, deux régions médianes et deux régions radiales extérieures en forme de segments.

8. Tour d'absorption selon l'une quelconque des revendications 4, 5 ou 7, **caractérisée en ce que** la deuxième paroi de séparation radialement extérieure (22) s'étend moins loin vers le haut que la première paroi de séparation radialement intérieure (16), ou les parois de séparation qui sont radialement plus à l'extérieur s'étendent moins loin vers le haut que les parois de séparation qui sont radialement plus à l'intérie

9. Tour d'absorption selon la revendication 5 ou 6, **caractérisée en ce que** la troisième paroi de séparation (23) située plus à l'extérieur dans le sens radial est moins haute que la deuxième paroi de séparation (22) située plus à l'intérieur dans le sens radial, ou les quatrième et, le cas échéant, autres parois de séparation situées plus à l'extérieur dans le sens radial sont chacune plus basses que la troisième et, le cas échéant, que la deuxième paroi de séparation situées respectivement plus à l'intérieur dans le sens radial.

10. La tour d'absorption selon l'une quelconque des revendications 1 à 9, **caractérisée en ce qu'**un couvercle (17) est prévu au-dessus d'une première paroi de séparation (16) ou, dans le cas de plusieurs parois de séparation, au-dessus des parois de séparation radialement extérieures (22, 23), qui présente une inclinaison formant un angle avec l'horizontale vers le milieu du fond de la colonne, les dimensions de ce couvercle (17) étant telles qu'il recouvre entièrement l'espace de la coque entre la première paroi de séparation (16) ou les parois de séparation radialement extérieures et la paroi extérieure (11) du fond de la colonne (15).

11. Tour d'absorption selon l'une quelconque des revendications 1 à 10, **caractérisée en ce qu'**un couvercle est disposé dans la région d'extrémité supérieure au niveau d'au moins une paroi de séparation, qui présente une inclinaison formant un angle avec l'horizontale vers le milieu du fond de la colonne, au moins par sections.

12. Tour d'absorption selon la revendication 11, **caractérisée en ce que,** dans le cas de deux, trois, quatre ou plusieurs parois de séparation, un couvercle est disposé sur chaque paroi de séparation dans la région d'extrémité supérieure, qui présente une inclinaison formant un angle avec l'horizontale vers le milieu du fond de la colonne, au moins par sections.

13. Tour d'absorption selon l'une quelconque des revendications 11 et 12, **caractérisée en ce que** les dimensions du couvercle sont telles qu'il ne recouvre que partiellement l'espace, en particulier l'espace annulaire, entre une paroi de séparation située radialement plus à l'intérieur et une paroi de séparation qui lui est adjacente et qui est située radialement plus à l'extérieur, plus précisément dans la région radialement intérieure de l'espace annulaire.

14. La tour d'absorption selon l'une quelconque des revendications 1 à 13, **caractérisée en ce qu'**au moins un premier conduit (18) pour l'acide nitrique part de la première région radialement intérieure (20) afin d'en extraire l'acide nitrique, et au moins un autre conduit (19) pour l'acide nitrique, séparé du premier conduit, part d'au moins une deuxième région radialement extérieure (21) afin d'évacuer l'acide nitrique de cette deuxième région.

15. Installation pour la production d'acide nitrique, **caractérisée en ce qu'**elle comprend une tour d'absorption (10) présentant les caractéristiques de l'une quelconque des revendications 1 à 14.

16. Procédé de production d'acide nitrique selon le procédé Ostwald, comprenant une étape de procédé dans laquelle l'absorption d'oxydes d'azote gazeux dans l'eau a lieu pour produire de l'acide nitrique dans une tour d'absorption (10), dans lequel les oxydes d'azote sont introduits dans la tour d'absorption dans une région inférieure et l'eau est introduite dans la tour d'absorption dans une région supérieure, dans lequel l'acide nitrique formé s'écoule vers le bas à travers une multitude de plateaux tamis (14) disposés les uns au-dessus des autres et espacés les uns des autres, et les oxydes d'azote s'écoulent vers le haut depuis le bas à travers la tour d'absorption à contre-courant du liquide aqueux, dans lequel, dans le fond de la colonne (15) de la tour d'absorption (10), de l'acide nitrique concentré s'accumule, **caractérisé en ce que,** par des éléments internes dans le fond de la colonne (15), en particulier par au moins une paroi de séparation (16) dans le fond de la colonne, au moins deux zones mutuellement séparées (20, 21) sont créées dans lesquelles de l'acide nitrique de concentration différente est collecté, dans lequel, grâce à au moins un couvercle (17) au-dessus de l'une des zones séparées (21), on obtient que l'acide nitrique qui s'écoule en premier des plateaux perforés (14) s'écoule uniquement dans l'une des zones séparées (20).

17. Procédé de production d'acide nitrique selon la revendication 16, **caractérisé en ce que** l'acide nitrique concentré s'écoulant des plateaux à tamis (14) est collecté dans une première région centrale (20) du fond de la colonne (15), et ce n'est qu'après que cette première région centrale (20) est complètement remplie que l'acide nitrique moins concentré passe par débordement au-dessus d'une paroi de séparation (16) de préférence cylindrique ou linéaire dans au moins une deuxième région (21) qui est située plus à l'extérieur dans le sens radial et qui est séparée de la première région (20).

18. Procédé de production d'acide nitrique selon la revendication 17, **caractérisé en ce que,** après avoir rempli complètement la deuxième région (21) radialement plus vers l'extérieur, l'acide nitrique moins concentré passe par débordement sur une autre paroi de séparation (22), de préférence cylindrique, dans une troisième région (24) qui est encore plus vers l'extérieur dans le sens radial et qui est séparée de la deuxième région (21).

19. Procédé de production d'acide nitrique selon l'une quelconque des revendications 16 à 18, **caractérisé en ce que** la position respective de la paroi de séparation (16) ou des parois de séparation (16, 22, 23) dans le fond de la colonne et du couvercle (17) au-dessus des zones séparées détermine le rapport des volumes (V₁, V₂, V₃, V₄) d'acide nitrique produit plus concentré et moins concentré.

20. Procédé de production d'acide nitrique selon l'une quelconque des revendications 16 à 18, **caractérisé en ce qu'**il est mis en oeuvre dans une installation comprenant une tour d'absorption (10) présentant les caractéristiques de l'une quelconque des revendications 1 à 14.
